# EUROPÄISCHE PATENTSCHRIFT

(11) **EP 0 831 395 B1**
(45) Veröffentlichungstag und Bekanntmachung des Hinweises auf die Patenterteilung: **27.03.2002**
(21) Anmeldenummer: 97115284.8
(22) Anmeldetag: 02.09.1997
(51) Int. Cl.: G06F 7/00, G06F 9/44

(54) **Verfahren zur maschinellen Erzeugung einer optimierten Wissensbasis für einen Fuzzy-Logik-Prozessor**
Method for automatically generating an optimized knowledge base for a fuzzy logic processor
Méthode pour la génération automatique d'une base de connaissances optimisée, pour un processeur à logique floue

(30) Priorität: 04.09.1996 DE 19635902
(43) Veröffentlichungstag der Anmeldung: 25.03.1998
(73) Patentinhaber: Infineon Technologies AG, 81669 München (DE)
(72) Erfinder: Schär, Thomas, 81825 München (DE); Erdmann, Michael, 81739 München (DE); Künemund, Thomas, 80337 München (DE); Eichfeld, Herbert, 80538 München (DE)

(56) Entgegenhaltungen:
- DE-C- 4 433 350
- ROVATTI R ET AL: "AN ENHANCED TWO-LEVEL BOOLEAN SYNTHESIS METHODOLOGY FOR FUZZY RULES MINIMIZATION" IEEE TRANSACTIONS ON FUZZY SYSTEMS, Bd. 3, Nr. 3, 1.August 1995, Seiten 288-299, XP000521027

## Beschreibung

Verfahren zur maschinellen Erzeugung einer optimierten Wissensbasis für einen Fuzzy-Logik-Prozessor.

Um bei einem Fuzzy-Logik-Prozessor bzw. Coprozessor die Wissensbasis und damit den erforderlichen Speicherplatz möglichst gering zu halten, können beispielsweise, wie in der deutschen Patentschrift DE-PS 44 33 350 C1 beschrieben, in den Regelprämissen den Eingangsgrößen nicht nur einzelne linguistische Werte sondern durch sogenannte IMF-Operatoren verknüpfte linguistische Werte zugeordnet werden, falls der verwendete Fuzzy-Logik-Coprozessor solche Operatoren entsprechend verarbeiten kann. Eine Regelbasis kann mehrere tausend Regeln mit vielen Eingangsgrößen aufweisen und benötigt, wenn sie von Hand erstellt wurde, praktisch immer zu viel Speicherplatz, selbst wenn bei der Erstellung der Regelbasis die obengenannten IMF-Operatoren verwandt wurden.

Aus der deutschen Offenlegungsschrift DE 44 39 505 A1 ist ein Verfahren zum Entwurf eines Fuzzy-Reglers bekannt, bei dem die Regeln mit gleichen Konkusionsteil durch ODER-Verknüpfungen zu kompakteren Regeln zusammengefaßt werden.

Ferner ist aus der US-Patentschrift 5,537,514 ein Verfahren zum Umordnen von Fuzzy-Regeln bekannt, bei dem die Regeln nach der Auftrittshäufigkeit der Regelbedingungen geordnet werden, um weniger Arbeitsspeicher bei der Verarbeitung zu benötigen.

Schließlich ist aus der deutschen Patentschrift DE 43 03 149 C1 ein Verfahren zur Abspeicherung und Auswertung einer Menge linguistischer Regeln bekannt, das eine schnelle Auswertung und einen möglichst geringen Speicherplatzverbrauch ermöglicht. Die der Erfindung zugrundeliegende Aufgabe besteht nun darin, ein Verfahren zur maschinellen Erzeugung einer Wissensbasis mit minimalen Speicherbedarf anzugeben. Ein geringerer Speicherbedarf bewirkt dabei auch eine geringere Leistungsaufnahme des Fuzzy-Logik-Coprozessors sowie eine Erhöhung der Verarbeitungsgeschwindigkeit bei der Inferenzbildung. Diese Aufgabe wird erfindungsgemäß durch die Merkmale des Patentanspruchs 1 gelöst. Vorteilhafte Weiterbildungen des Verfahrens ergeben sich aus den Unteransprüchen.

Die Erfindung ist im folgenden anhand der Zeichnungen näher erläutert. Dabei zeigt
- Figur 1: ein grobes Flußdiagramm zur Erläuterung des erfindungsgemäßen Verfahrens,
- Figur 2: ein Diagramm zur Erläuterung einer vorteilhaften Weiterbildung eines Verfahrensschritts von Figur 1,
- Figur 3: ein Balkendiagramm zur Verdeutlichung der Rechenzeiteinsparung des vorteilhaften Verfahrensschritts nach Figur 2,
- Figur 4 und 5: Flußdiagramme zur weiteren Erläuterung des vorteilhaften Verfahrensschritts nach Figur 2,
- Figur 6: eine Darstellung zur Erläuterung der IMF-Operatoren und
- Figur 7: ein weiteres Flußdiagramm zur Erläuterung einer vorteilhaften Weiterbildung eines weiteren Verfahrensschritts des in Figur 1 dargestellten Verfahrens.

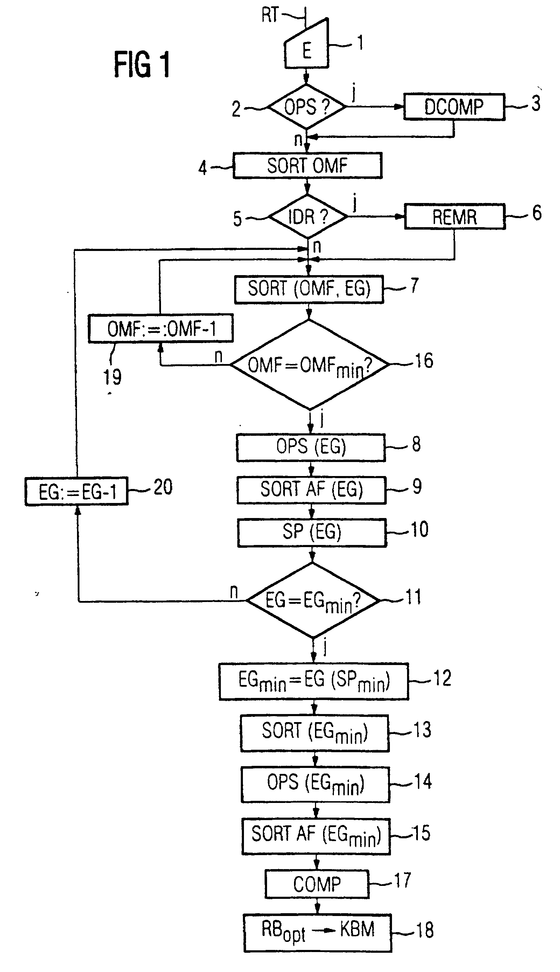

In Figur 1 sind Verfahrensschritte 1 ... 20 dargestellt, wobei in 1 ein Regelbasistext RT eingegeben bzw. eingelesen wird und in 18 eine optimierte Regelbasis RB_{Opt} in einen Wissensbasisspeicher KBM, der beispielsweise aus einem DRAM oder aber auch aus einem EPROM bestehen kann, eines Fuzzy-Logik-Coprozessors eingeschrieben wird und wobei die Schritte 7 7 ... 10, 16 und 19 das Herzstück des erfindungsgemäßen Verfahrens darstellt.

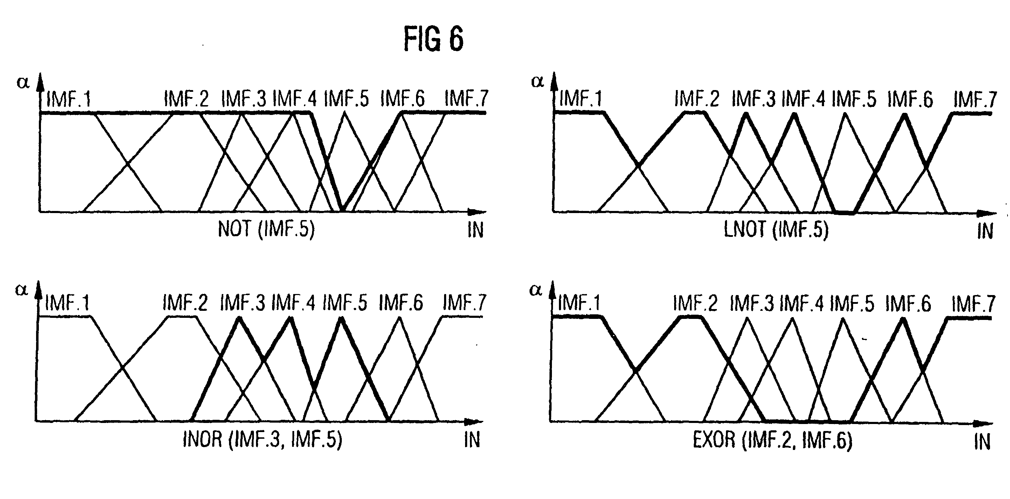

Nachdem ein Regeltext RT in einem Rechner vorliegt wird in einem Verfahrensschritt 2 untersucht, ob der Regeltext RT bereits irgendwelche IMF-Operatoren zur Verknüpfung von linguistischen Werten der Eingangsgrößen bzw. den zu den linguistischen Werten gehörenden Eingangszugehörigkeitsfunktionen IMF (input membership functions), die im Zusammenhang mit Figur 6 im folgenden noch näher erläutert werden. Ist dies der Fall, so wird in einem Verfahrensschritt 3 die Regelbasis dekomprimiert, so daß die dekomprimierte Regelbasis nur Regelprämissen enthält, bei denen jeder Eingangsgröße nur ein einzelner linguistischer Wert zugeordnet ist. Falls sichergestellt ist, daß keine Operatoren im Regeltext RT enthalten sind, kann auf die Schritte 2 und 3 verzichtet werden.

Daraufhin wird die Regelbasis ohne IMF-Operatoren nach den Konklusionsteilen der Regeln in dem Schritt 4 geordnet, wobei beispielsweise die Ausgangszuhörigkeitsfunktionen OMF (output membershipfunctions) entsprechend den linguistischen Ausgangswerten z.B. in fallender Reihenfolge sortiert werden.

Optional kann die Regelbasis in einem Schritt 5 auf das Vorliegen von identischen Regeln untersucht werden und gegebenenfalls in einem Schritt 6 alle identischen Regeln bis auf jeweils eine jeweilige Regel reduziert werden. Durch mehrere gleiche Regeln kann aber eventuell abhängig von der weiteren Verarbeitung eine besondere Gewichtung dieser mehrfach vorhandenen Regeln erreicht werden und es ist deshalb vielleicht nicht sinnvoll, die mehrfach vorhandenen Regeln auf jeweils eine Regel zu reduzieren.

In einem Schritt 7 werden alle Regeln mit einem gemeinsamen linguistischen Ausgangswert bzw. einer gemeinsamen Ausgangszugehörigkeitsfunktion OMF nach einer ersten Eingangsgröße EG umsortiert. Um alle Regeln mit einem gemeinsamen linguistischen Ausgangswert zu erfassen, wird der Schritt 7 sooft durchlaufen bis in einem Schritt 16 eine Prüfung OMF=OMF_{Min} ergibt, wobei bei jedem Schritt 7 in einem Schritt 19 OMF um eins dekrementiert wird. Nachdem die Regelbasis bezüglich dieser Eingangsgröße umsortiert wurde, können die Eingangszugehörigkeitsfunktionen IMF dieser Eingangsgröße innerhalb der so entstandenen Regelgruppen auf den Einsatz von möglichen IMF-Operatoren einfacher untersucht werden als ohne Umsortierung.

Ziel der Sortierung einer Regelbasis nach einer Eingangsgröße ist es, alle Regeln, die bis auf die aktuell betrachtete Eingangsgröße EG über gleiche Regelprämissen verfügen, innerhalb der Regelbasis hintereinander zu schreiben. Dies hat in der Weise zu erfolgen, daß auch die Eingangszugehörigkeitsfunktionen IMF der betrachteten EG nach fallenden Nummern geordnet sind.

Zur Erläuterung dieser Sortierung wird eine Beispielsregelbasis mit drei Eingangsgrößen EG₁..EG₃ und folgenden Merkmalen angegeben:
EG₁: 3 Zugehörigkeitsfunktionen (N, ZE, P)
EG₂: 7 Zugehörigkeitsfunktionen (NB, NS, N, ZE, P, PS, PB)
EG₃: 7 Zugehörigkeitsfunktionen (NB, NS, N, ZE, P, PS, PB)
AG: 7 Zugehörigkeitsfunktionen (NB, NS, N, ZE, P, PS, PB)

Die linguistischen Werte NB, NS, N, ZE, P, PS und PB bedeuten dabei "negativ big", negativ small", "negativ", "zero", "positiv", positiv small" und "positiv big". In diesem Beispiel wird nur auf die Sortierung innerhalb derjenigen Regeln eingegangen, die sich in ihrem Konklusionsteil auf die OMF "PB" beziehen. Die angestrebte Sortierreihenfolge für alle anderen Regeln der Regelbasis erfolgt nach gleichem Prinzip. Nachdem die IMF der Eingangsgrößen 1 bis 3 sortiert wurden, ist es möglich, die zu optimierende Eingangsgröße EG₃ auf den möglichen Einsatz von IMF-Operatoren zu untersuchen.
Regel.: 1 **IF** EG₁=P **AND** EG₂=PB **AND** EG₃=PB **THEN** AG=PB
Regel.: 2 **IF** EG₁=P **AND** EG₂=PB **AND** EG₃=PS **THEN** AG=PB
Regel.: 3 **IF** EG₁=P **AND** EG₂=PB **AND** EG₃=P **THEN** AG=PB
Regel.: 4 **IF** EG₁=P **AND** EG₂=PB **AND** EG₃=ZE **THEN** AG=PB
Regel.: 5 **IF** EG₁=P **AND** EG₂=PB **AND** EG₃=N **THEN** AG=PB
Regel.: 6 **IF** EG₁=P **AND** EG₂=PS **AND** EG₃=PB **THEN** AG=PB
Regel.: 7 **IF** EG₁=P **AND** EG₂=PS **AND** EG₃=PS **THEN** AG=PB
Regel.: 8 **IF** EG₁=P **AND** EG₂=PS **AND** EG₃=P **THEN** AG=PB
Regel.: 9 **IF** EG₁=P **AND** EG₂=PS **AND** EG₃=ZE **THEN** AG=PB
Regel.: 10 **IF** EG₁=P **AND** EG₂=P **AND** EG₃=PB **THEN** AG=PB
Regel.: 11 **IF** EG₁=P **AND** EG₂=P **AND** EG₃=PS **THEN** AG=PB
Regel.: 12 **IF** EG₁=P **AND** EG₂=P **AND** EG₃=P **THEN** AG=PB
Regel.: 13 **IF** EG₁=P **AND** EG₂=ZE **AND** EG₃=PB **THEN** AG=PB
Regel.: 14 **IF** EG₁=P **AND** EG₂=ZE **AND** EG₃=PS **THEN** AG=PB
Regel.: 15 **IF** EG₁=P **AND** EG₂=N **AND** EG₃=PB **THEN** AG=PB
Regel.: 16 **IF** EG₁=ZE **AND** EG₂=PB **AND** EG₃=PB **THEN** AG=PB
Regel.: 17 **IF** EG₁=ZE AND EG₂=PB **AND** EG₃=NB **THEN** AG=PB

In dem dargestellten Beispiel wurden alle Regeln nach den IMF-Nummern ihrer Eingangsgrößenprämissen sortiert. Prinzipiell wurde dafür folgende Abarbeitungsreihenfolge eingehalten:
1. Die Zugehörigkeitsfunktionen der Eingangsgröße 1 werden im Bereich gleicher Regelkonklusionen (Regeln 1-17) in fallender Reihenfolge sortiert.
2. Die Zugehörigkeitsfunktionen der Eingangsgröße 2 werden im Bereich gleicher Regelkonklusionen und gleicher Regelprämissen für Eingangsgröße EG₁ (Regeln 1-15 und 16-17) in fallender Reihenfolge sortiert.
3. Die Zugehörigkeitsfunktionen der Eingangsgröße EG₃ werden im Bereich gleicher Regelkonklusionen, gleicher Regelprämissen für Eingangsgröße EG₁ und gleicher Regelprämissen für die Eingangsgröße EG₂ (Regeln 1-5, 2-9, 3-12, 13-14, 15, 16-17) in fallender Reihenfolge sortiert.

Die in den Punkten 1.-3. angegebenen Regelbereiche werden für weitere Betrachtungen mit "Val_Rue-Area"-Bereiche (Valid Rule Area) bezeichnet. Man kann erkennen, daß diese Bereiche sich vom Punkt 1. bis hin zum Punkt 3. in immer mehr kleine Teilbereiche mit immer weniger Regeln in diesen Bereichen unterteilen.

Im Ergebnis dieser Sortierung ist es jetzt einfacher möglich, die einzelnen Zugehörigkeitsfunktionen der Eingangsgröße EG₃ auf eine mögliche Optimierung zu untersuchen, indem die entstandenen Regelbereiche auf einen möglichen Einsatz von IMF-Operatoren für diese Eingangsgröße untersucht werden.

Wird beispielsweise wie im vorhergehenden Beispiel die Eingangsgröße EG₃ als Ordnungsgröße gewählt, so ergeben sich folgende Regelgruppen:
1. Regel 1 ... Regel 5
2. Regel 6 ... Regel 9
3. Regel 10 ... Regel 12
4. Regel 13 ... Regel 14
5. Regel 15 ... Regel 15
6. Regel 16 ... Regel 17

Aus dem vorher genannten Beispiel wird deutlich, daß alle 17 Regeln die gemeinsame Ausgangsgröße AG = PB aufweisen und daß zunächst die Eingangsgröße EG₁ in fallender Reihenfolge geordnet wurde. Ferner wird deutlich, daß dann zunächst die Regeln 1 bis 15 mit gleicher Eingangsgröße EG₁=P und danach die Regel 16 und 17 mit der gleichen Eingangsgröße EG₁=ZE bezüglich der Eingangsgröße EG₂ in fallender Reihenfolge geordnet wurden und daß innerhalb der obengenannten Regelgruppen mit gleichem linguistischen Wert der Eingangsgröße EG₂ die Regeln noch nach fallenden lingustischen Werten der Eingangsgröße EG₃ geordnet wurden. In dieser Darstellung können IMF-Operatoren bezüglich der Eingangsgröße EG₃ besonders einfach gefunden werden, da Bereiche von linguistischen Werten bzw. von Eingangszugehörigkeitsfunktionen für die Eingangsgröße EG₃ unmittelbar und zusammenhängend erfaßt werden können.

So geordnet können Operatoren für Regelbereiche mit gleicher Ausgangszugehörigkeitsfunktion hinsichtlich einer jeweiligen Eingangsgröße in einem im folgenden noch ausführlich erläuterten Schritt 8 ermittelt werden. Da solche IMF-Operatoren in der Regel mehr Speicherplatz erfordern als zur Speicherung eines einzelnen linguistischen Wertes erforderlich ist und mehrere Einzelprämissen mit einzelnen linguistischen Werten jeweils in einem Regelwort gespeichert sind, werden die Regeln vorteilhafterweise in einem Schritt 9 noch so geordnet, daß eventuell die durch die längeren Regelprämissen aufgrund der IMF-Operatoren vorhandenen Lücken in den Regelworten durch kurze Einzelprämissen mit nur einem linguistischen Wert aufgefüllt werden bevor in einem Schritt 10 für eine Regelgruppe mit gleichen Ausgangszugehörigkeitsfunktionen OMF und bezüglich einer jeweiligen Eingangsgröße EG der jeweilige erforderliche Speicherplatz bestimmt wird. Die Schritte 7 bis 10 werden in einer Schleife 11 für alle Eingangsgrößen wiederholt, wodurch die Regelbasis für alle Eingangsgrößen hinsichtlich der Verwendbarkeit von IMF-Operatoren untersucht wird und jeweils der erforderliche Speicherplatz die hinsichtlich einer jeweiligen Eingangsgröße optimierten Regelbasis ermittelt wird. In einem Schritt 12 kann nun aus allen Speicheraufwandszahlen für die hinsichtlich der Eingangsgrößen optimierten Regelbasen die Eingangsgröße mit dem minimalen Speicherbedarf für die optimierte Regelbasis gesucht werden, die mit EG_{Min} bezeichnet wird.

Prinzipiell ist jedoch auch denkbar, daß aufgrund weiterer äußerer Bedingungen nicht die Eingangsgröße EG_{Min}, sondern eine andere Eingangsgröße für die Optimierung verwendet wird, bei der nicht der maximal mögliche Speichereinsparungseffekt auftritt, aber bei der meist gegenüber den ursprünglich eingegebenen Regeln ein weitaus geringerer Speicherplatzbedarf besteht.

In dem in Figur 1 dargestellten Flußdiagramm wird jedoch von der Eingangsgröße EG_{Min} ausgegangen und in einem Schritt 13 eine Umsortierung der Regelgruppen mit jeweils gleichen Ausgangszugehörigkeitsfunktionen OMF bezüglich dieser Eingangsgröße EG_{Min} wie im Schritt 7 und anschließend in einem Schritt 14 eine Operatorsuche wie im Schritt 8 durchgeführt'.

Gegebenenfalls schließt sich noch ein Schritt 15 an der, wie im Schritt 9 eine Umsortierung der Regelbasis vornimmt, um eventuelle Lücken in den Regelwörtern mit Regelprämissen mit nur einem einzelnen linguistischen Wert aufzufüllen und den Speicherplatz auf diese Weise nochmals zu verringern.

Anschließend erfolgt in einem Schritt 17 eine Kompilierung der so optimierten Regelbasis und ein Abspeichern 18 der kompilierten optimierten Regelbasis in den Wissensbasisspeicher KBM des Fuzzy-Logik-Coprozessors.

Prinzipiell wäre auch denkbar, eine Regelbasis bezüglich mehrerer Eingangsgrößen gleichzeitig nach möglichen Operatoren zu durchsuchen um eventuell eine Regelbasis mit noch geringerem Speicherbedarf zu ermitteln. Dies bedeutet jedoch einen wesentlich höheren Aufwand und liefert bei den in der Praxis auftretenden Regelbasen in aller Regel kein besseres Ergebnis.

Die Sortierung in Schritt 7 muß möglichst zeiteffizient sein, da die durch den hier verwendeten Fuzzy-Coprozessor verarbeitbare Wissensbasis bis zu 4096 Eingangsgrößen mit jeweils 15 Zugehörigkeitsfunktionen und 131072 Regeln besitzen kann. Die zu verarbeitenden programminternen Datenmengen und somit der Rechenzeitbedarf für deren Umsortierung steigen hierbei überproportional zu diesen Kennwerten an.

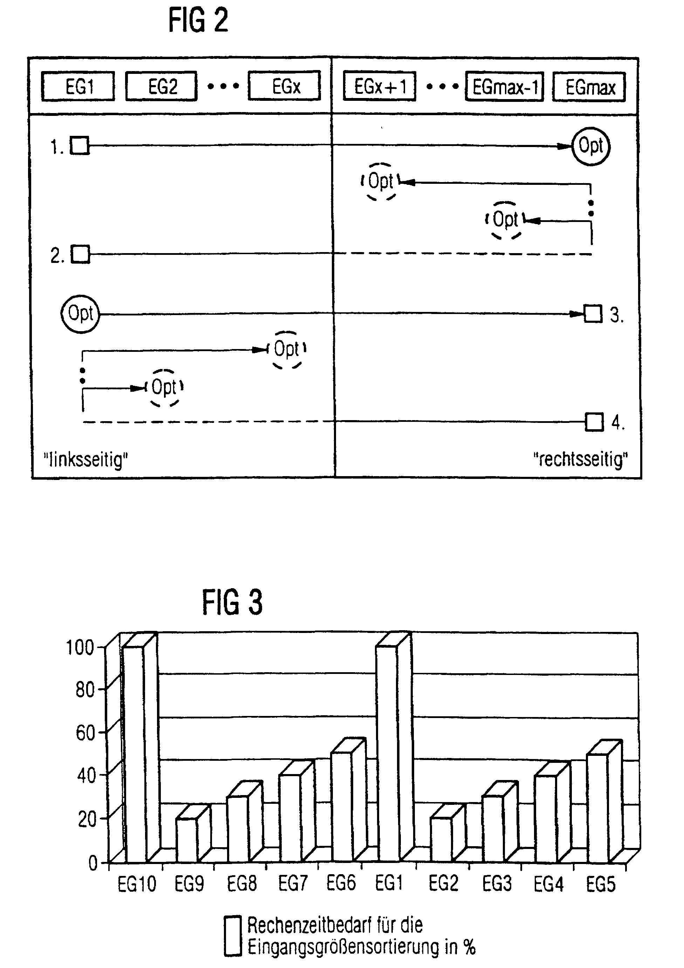

Durch eine im folgenden näher erläuterte vorteilhafte Weiterbildung des Schrittes 7 kann die Umsortierung einer Regelbasis unter Ausnutzung bereits erfolgter Umsortierungen besonders effizient erfolgen. Aus Figur 2 ist dabei ersichtlich, daß die Eingangsgrößen EG₁ ... EGₓ in eine als "linksseitig" bezeichnete Gruppe von Eingangsgrößen und die Eingangsgrößen EGₓ₊₁ ... EGₘₐₓ als "rechtsseitige" Gruppe von Eingangsgrößen zusammengefaßt sind und daß folgen Unterpunkte der Reihe nach erfolgen:
1.) Eine Globale Sortierung der Regelbasis nach steigenden linguistischen Werten der Eingangsgrößen, das heißt in jedem Bereich gleicher Regelkonklusionen werden die EG nacheinander nach fallenden IMF-Indizes sortiert. Diese Sortierung erfolgt dabei für die jeweils betrachtete EG, innerhalb derjenigen Regelnummern-Bereiche, für die alle zuvor sortierten Eingangsgrößen (EG₁, ..., EGᵣ₋₁) gleiche Regelprämissen aufweisen. Am Ende dieser Sortierung kann die Eingangsgröße EGₘₐₓ auf den möglichen Einsatz von IMF-Operatoren untersucht werden.
2.) Auf Punkt 1 folgende "rechtsseitige" Sortierungen deren Ziel es ist, die Ziel-Eingangsgrößen EGₒₚₜ = EGₘₐₓ₋₁, ... EGₓ₊₁ auf einen möglichen Operatoreinsatz zu untersuchen. Für diese Sortierung werden die durch die in Punkt 1 entstandenen Bereiche gleicher Regelprämissen der EG₁, ..., EGₒₚₜ₋₁ und der OMF beibehalten. Die Regelbasis braucht also nur noch nach den verbleibenden Eingangsgrößen sortiert zu werden, und zwar nach fallenden Indizes, das heißt nacheinander EGₘₐₓ, EGₘₐₓ₋₁, ..., EGₒₚₜ.
3.) Eine Globale Sortierung der Regelbasis nach fallenden linguistischen Werten der Eingangsgröße, das heißt in jedem Bereich gleicher Regelkonklusionen werden die Eingangsgrößen nach fallenden linguistischen Werten der Eingangsgrößen sortiert. Diese Sortierung erfolgt dabei für die jeweils betrachte EGᵣ innerhalb derjenigen Regelnummern-Bereiche, für die alle zuvor sortierten Eingangsgrößen EGₘₐₓ, ..., EGᵣ₊₁ gleiche Regelprämissen aufweisen. Am Ende dieser Sortierung kann die Eingangsgröße EG1 auf den möglichen Einsatz von IMF-Operatoren untersucht werden.
4.) Auf Punkt 3 folgenden "linksseitigen" Sortierungen der Zwiel es ist, die Ziel-Eingangsgrößen EGₒₚₜ = EG₂, ...EGₓ auf einen möglichen Operatoreinsatz zu untersuchen. Für diese Sortierung werden die durch die in Punkt 3. entstandenen Bereiche gleicher Regelprämissen der EGₘₐₓ, ... EGₒₚₜ₊₁ und der OMF beibehalten. Die Regelbasis braucht also nur noch nach den verbleibenden Eingangsgrößen sortiert zu werden, und zwar nach steigenden Indizes, das heißt nacheinander EG₁, EG₂, ..., EGₒₚₜ.

In Figur 3 ist ein Balkendiagramm dargestellt, der den Rechenzeitbedarf des des vorteilhaften Sortierverfahrens nach Figur 2, bei 10 Eingangsgrößen EG₁ ... EG₁₀ für die einzelnen Eingangsgrößen prozentual darstellt. Hierbei wird deutlich, daß die Eingangsgröße EG₁₀ bei der globalen Sortierung mit steigenden Nummern den vollen Rechenaufwand erfordert, die Eingangsgröße EG₉ hingegen nur 20 Prozent des Aufwandes, da die Sortierung bezüglich der Eingangsgrößen EG₁ ... EG₈ bestehen bleiben kann und nur die Spalten EG₉ und EG₁₀ miteinander ausgetauscht und neu sortiert werden. Die Eingangsgröße EG₈ benötigt 30 Prozent, die Eingangsgröße EG₇ 40 Prozent und die Eingangsgröße EG₆ 50 Prozent. Für die Eingangsgröße EG₁ ist eine globale Sortierung der Regelbasis nach den fallenden Nummern erforderlich und der Regelaufwand beträgt 100 Prozent. Der Regelaufwand der "linksseitigen" sortiert beträgt bei der Eingangsgröße EG₂ 20 Prozent, bei der Eingangsgröße EG₃ 30 Prozent, bei der Eingangsgröße EG₄ 40 Prozent und bei der Eingangsgröße EG₅ 50 Prozent.

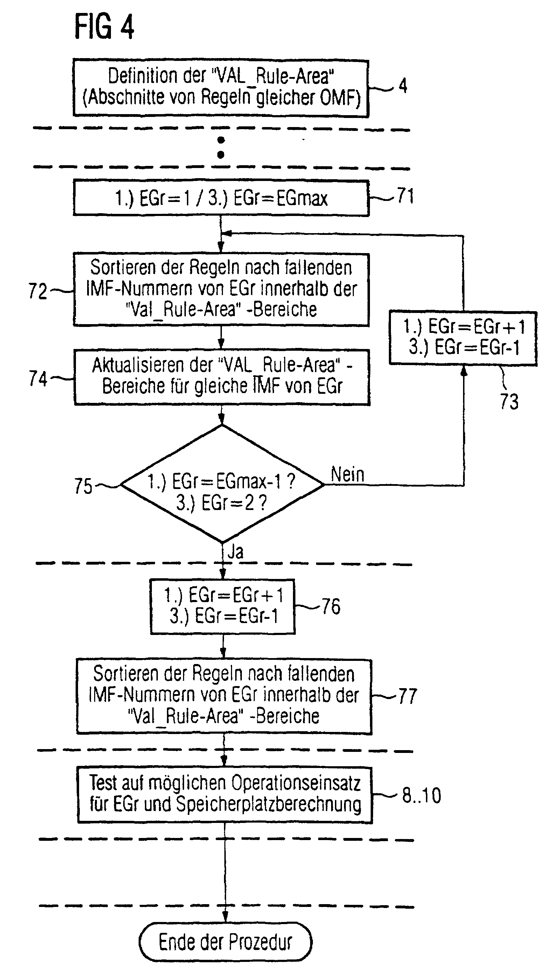

In Figur 4 sind die globalen Sortierungen erstens und drittens in einem Flußdiagramm dargestellt. Nach der Definition der Regelgruppen mit gleichen Ausgangszugehörigkeitsfunktionen OMF im Schritt 4 werden die Eingangsgrößen EGᵣ bei 1.) dem Wert 1 und bei 3.) dem Wert EGₘₐₓ im Schritt 71 zugeordnet. Im Schritt 72 werden für die je nach fallenden linguistischen Werten der jeweiligen Eingangsgröße EGᵣ innerhalb eines sogenannten Val_Rule-Area-Bereichs vorgenommen. Ein sogenannter Val_Rule-Area-Bereich ist die Regelgruppe, zum Beispiel die Regel 5 bis 8 im vorher genannten Beispiel, für die alle Vorbedingungen, das heißt gleiche Ausgangszugehörigkeitsfunktionen OMF und gleiche Regelprämissen in der bis dahin betrachteten Eingangsgrößen, erfüllt sind. Daraufhin werden in einem Schritt 74 diese Val_Rule-Area-Bereiche aktualisiert. Die Schritte 72 und 74 werden solange ausgeführt, bis bei 1.) die aktuelle Eingangsgröße EGᵣ gleich groß EGₘₐₓ₋₁ und bei 3.) die Eingangsgröße EGᵣ gleich 2 ist, wobei bei jedem Schleifendurchgang in einem Schritt 73 bei 1.) die aktuelle Eingangsgröße um 1 inkrementiert und bei 3.) die aktuelle Eingangsgröße um 1 dekrementiert wird. In dem Schritt 76 wird bei 1.) die Eingangsgrößen um 1 inkrementiert und bei 3.) wird eine Eingangsgröße um 1 dekrementiert. Nun folgt in einem Schritt 77 eine Sortierung nach fallenden linguistischen Eingangswerten der jeweiligen aktuellen Eingangsgrößen innerhalb der Val_Rule-Area-Bereiche. Ist dies erfolgt, wird im Schritt 8 ... 10 ein Test auf möglichen Operatoreinsatz für die jeweilige Eingangsgröße und eine entsprechende Speicherplatzberechnung durchgeführt.

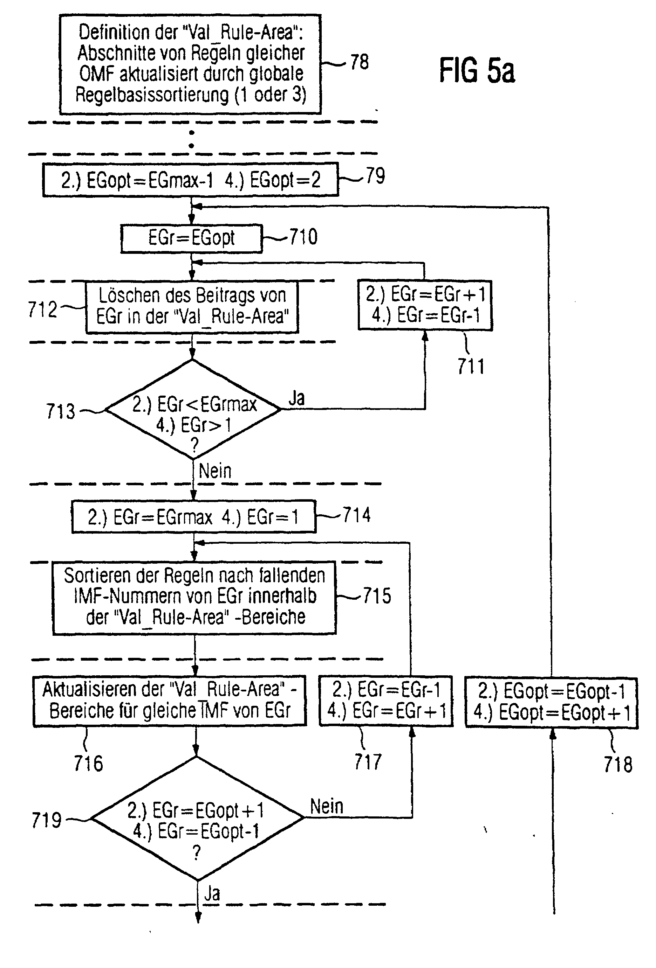

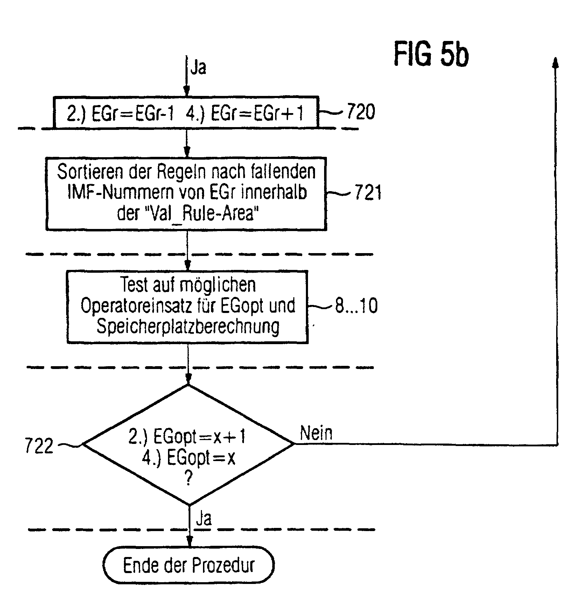

In Figur 5 ist in einem Flußdiagramm die sogenannte "linksseitige" und "rechtsseitige" Sortierung der vorteilhaften Weiterbildung des Schrittes 7 dargestellt. In einem Schritt 78 wird der Val_Rule-Area-Bereich definiert, da dieser durch die globale Regelbasissortierung 1.) oder 3.) aktualisiert wird. In einem Schritt 79 wird bei 2.) eine Eingangsgröße EGₒₚₜ bezüglich der zu optimieren ist gleich EG-ₘₐₓ₋₁ und bei 4.) die Eingangsgröße EGₒₚₜ gleich 2 gesetzt.

Die aktuelle Eingangsgröße EGᵣ wird in einem Schritt 710 gleich der Eingangsgröße EGₒₚₜ gesetzt. In einer Schleife 711 ... 713 wird der Beitrag der aktuellen Eingangsgröße EGᵣ am Val_Rule-Area Bereich solange gelöscht bis bei 2.) die Eingangsgröße EGᵣ kleiner EGᵣₘₐₓ und bei 4.) die Eingangsgröße EGᵣ größer 1 nicht mehr erfüllt ist. Das Löschen des Beitrags einer aktuellen Eingangsgröße bedeutet, daß die im obigen Beispiel durch Unterstreichungslinien angedeuteten Bereichsgrenzen zwischen den einzelnen Regelgruppen wieder beseitigt werden, soweit die bereits erfolgten Sortierungen nicht mehr benötigt werden.

Daraufhin wird im Schritt 714 bei 2.) die aktuelle Eingangsgröße EGᵣ gleich EGᵣₘₐₓ und bei 4.) die Eingangsgröße EGᵣ gleich 1 gesetzt. Anschließend wird in einer Schleife 715 ... 719 eine Sortierung der Regel nach fallenden linguistischen Werten der aktuellen Eingangsgröße innerhalb der Val_Rule-Area und eine jeweilige Aktualisierung dieser Bereiche solange durchgeführt, bis die aktuelle Eingangsgröße bei 2.) gleich EGₒₚₜ +1 und bei 4.) gleich EGₒₚₜ -1 ist, wobei bei jedem Schleifendurchlauf bei 2.) die Eingangsgröße EGᵣ jeweils um 1 dekrementiert und bei 4.) die Eingangsgröße EGᵣ um 1 inkrementiert wird. Bei einem Schritt 720 wird nach dem Schleifendurchlauf 715 ... 719 die aktuelle Eingangsgröße EGᵣ bei 2.) um 1 dekrementiert und bei 4.) um 1 inkrementiert und im Schritt 721 innerhalb der jeweiligen Val_Rule-Area nachfallenden linguistischen Werten der aktuellen Eingangsgröße EGᵣ sortiert. Nach dieser letzten Sortierung kann ein Test auf einen möglichen Operatoreinsatz und eine Speicherplatzberechnung 8 ... 10 erfolgen. Die Schritte 710 ... 721 und 8 ... 10 werden dabei in einer Schleife sooft durchlaufen, bis bei 2.) EGₒₚₜ gleich EGₓ₊₁ und bei 4.) EGₒₚₜ gleich EGₓ sind, wobei bei jedem Schleifendurchlauf EGₒₚₜ bei 2.) um 1 dekrementiert und bei 4.) um 1 inkrementiert werden.

In Figur 6 sind vier Beispiele für sogenannte IMF-Operatoren beispielhaft an den Operatoren Nicht NOT, linguistisches Nicht LONT und den Operatoren INOR sowie EXOR dargestellt. In allen vier Fällen sind für eine Eingangsgröße IN die Eingangszugehörigkeitsfunktionen IMF.1 ... IM.7 eingezeichnet. Der Operator NOT(IMF.5) bewirkt eine Spiegelung an der Achse α = 0,5. Das linguistische Licht LNOT(IMF.5) bewirkt eine Hüllkurve aller Eingangszugehörigkeitsfunktionen unter Auslassung der Eingangszugehörigkeitsfunktion IMF.5. Der Operator INOR(IMF.3, IMF.5) sowie der Operator EXOR(IMF.2, IMF.6) benötigt, aufgrund seiner beiden Argumente, mehr Speicherplatz als und beansprucht deshalb mehr Segmente in einem Regelwort als dies bei einzelnen linguistischen Werten oder bei den Operatoren NOT oder NNOT der Fall ist. Der Operator INOR (IMF.3, IMF.5) bewirkt eine Hüllkurvenbildung aller Zugehörigkeitsfunktionen zwischen der Zugehörigkeitsfunktion IMF.3 und der Zugehörigkeitsfunktion IMF.5. Der Operator EXOR (IMF.2, IMF.6) hingegen bewirkt eine Hüllkurvenbildung aller Eingangszugehörigkeitsfunktionen IMF.1 und IMF.2 bis zu der Eingangszugehörigkeitsfunktion, die im ersten Argument angegeben ist und eine Hüllkurvenbildung der Zugehörigkeitsfunktionen ab der im zweiten Argument angegebenen Eingangszugehörigkeitsfunktion.

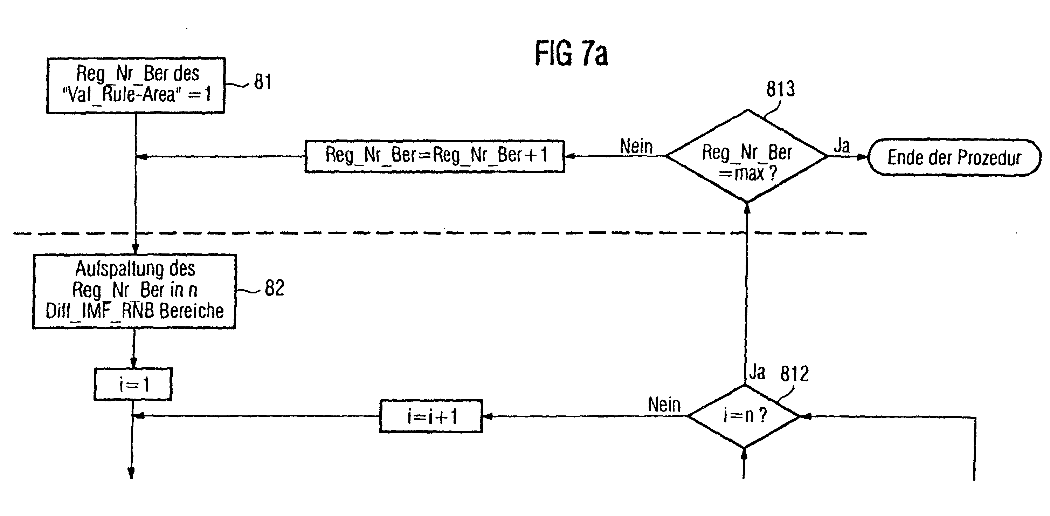

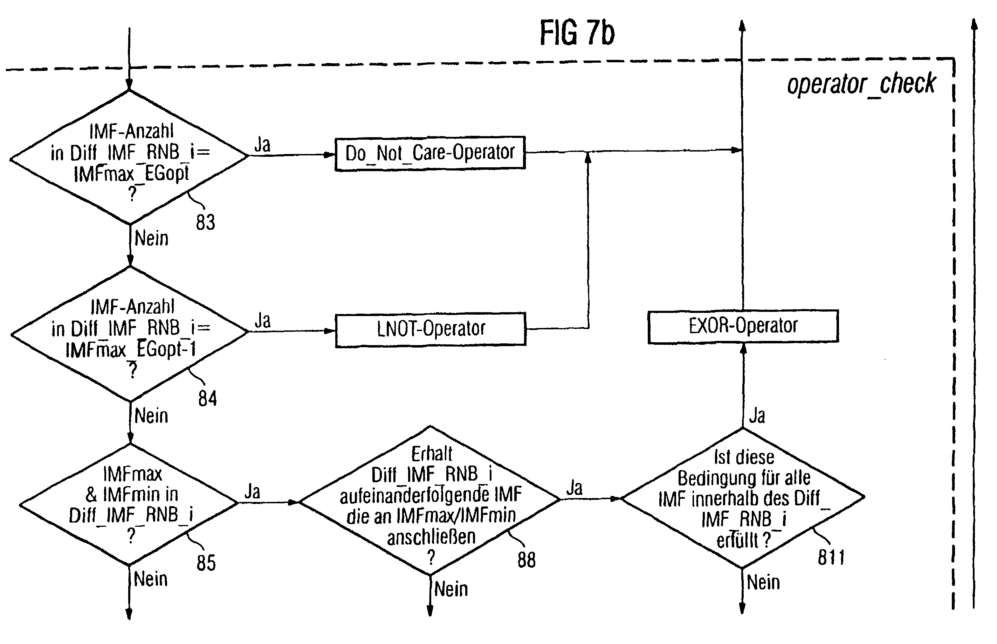

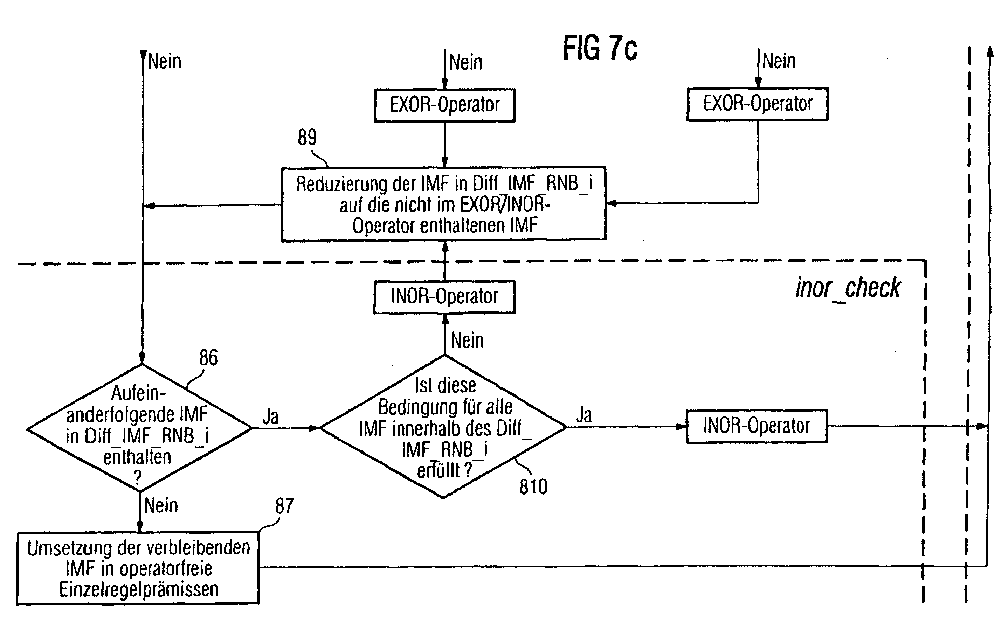

In Figur 7 ist ein Flußdiagramm einer vorteilhaften Weiterbildung des Schrittes 8 zur Suche der IMF-Operatoren dargestellt. Wenn sich in der Regelbasis konkurrierende oder identische Regeln befinden, ist es erforderlich, die Regelgruppen der Val_Rule-Area-Bereiche vorab in weitere Unterbereiche zu unterteilen, in denen jede Eingangszugehörigkeitsfunktion IMF der betrachteten Eingangsgröße EGₒₚₜ nur einmal vorkommt. Die Regeln, die bereits DO_NOT_CARE bzw. NOT-Operatoren enthalten werden bereits vor dem eigentlichen Operatorsuchschritt aus der zu untersuchenden Regelgruppe entfernt und ohne weitere Bearbeitung in die "optimierte" Regelbasis übernommen. Im Schritt 83 wird zuerst der mögliche Einsatz einer sogenannten DO_NOT_CARE-Operator geprüft. Da dieser nur zum Einsatz kommen kann, wenn alle möglichen Zugehörigkeitsfunktionen der zu optimierenden Eingangsgröße im aktuellen Regelbereich vorhanden sind, wird dieser Test allen anderen vorangestellt. Ähnlich wird mit dem Test auf einen möglichen linguistischen Nicht-Operator LNOT verfahren, bei dem das Fehlen einer einzigen Zugehörigkeitsfunktion im Schritt 84 überprüft wird. Zur Überprüfung, ob ein EXOR-Operator möglich ist, wird zunächst im Schritt 85 festgestellt, ob die maximal und die minimal mögliche linguistische Wert bzw. die zugehörige Eingangszugehörigkeitsfunktion beteiligt ist. Ist dies der Fall, so wird in Schritt 88 festgestellt, ob sich der maximalen und der minimalen Eingangszugehörigkeitsfunktion weitere Eingangszugehörigkeitsfunktionen anschließen und im Schritt 811, ob diese Bedingung für alle Zugehörigkeitsfunktionen in dieser Regelgruppe erfüllt ist. Treffen die in 88 und 811 festgestellten Bedingungen nicht zu, erfolgt eine Reduzierung der Eingangszugehörigkeitsfunktionen der jeweiligen Regelgruppe auf die nicht bereits in einem EXOR oder einem INOR-Operator enthaltenen Zugehörigkeitsfunktionen. Falls im Schritt 85 nicht die maximale und die minimale Eingangszugehörigkeitsfunktion in der jeweiligen Regelgruppe enthalten ist wird in einem Schritt 86 geprüft, ob aufeinanderfolgende Eingangszugehörigkeitsfunktionen enthalten sind. Sind keine aufeinanderfolgenden Eingangszugehörigkeitsfunktionen enthalten so folgt im Schritt 87 eine Umsetzung der verbleibenden Zugehörigkeitsfunktionen in operatorfreie Einzelregelprämissen. Im anderen Fall, wenn aufeinanderfolgende Eingangszugehörigkeitsfunktionen enthalten sind, wird im Schritt 810 geprüft, ob diese Bedingungen für alle Eingangszugehörigkeitsfunktionen in dieser Regelgruppe erfüllt sind, ist dies der Fall, so können alle diese Regeln mit einem INOR-Operator zusammengefaßt werden. Ist die Bedingung im Schritt 810 nicht erfüllt, so werden die Eingangszugehörigkeitsfunktionen im Schritt 89 auf Eingangszugehörigkeitsfunktionen reduziert, die nicht in EXOR/INOR-Operatoren enthalten sind und gemäß den Schritten 86, 87 und 810 weiter untersucht. In einer Abfrage 812 wird festgestellt, ob alle Regelgruppen erfaßt wurden. Eine Abfrage 813 prüft, ob alle Bereiche eines Val_Rule-Area-Bereiches, die beispielsweise aus gleichen oder konkurrierende Regeln entstehen, erfaßt sind.

## Patentansprüche

1. Verfahren zur maschinellen Erzeugung einer Wissensbasis für einen Fuzzy-Logik-Prozessor,
a) bei dem ein Regelbasistext (RT) nach seinen Regelkonklusionen sortiert (4) wird,
b) bei dem der nach den Regelkonklusionen sortierte Regelbasistext bezüglich mindestens einer ausgewählten Eingangsgröße (EG₃, EGₒₚₜ) derart sortiert wird,
- daß Gruppen mit konstantem linguistischem Wert einer nicht ausgewählten Eingangsgröße (EG₁) gebildet werden,
- daß innerhalb dieser Gruppen bezüglich mindestens einer nächsten nicht ausgewählten Eingangsgröße (EG₂), falls diese vorhanden ist, ebenfalls bezüglich dieser mindestens einen nächsten Eingangsgröße eine Bildung von Gruppen mit gleichem linguistischen Wert erfolgt, und
- daß die Gruppen bezüglich der linguistischen Werte der ausgewählte Eingangsgröße (EG₃) sortiert werden und
c) bei dem in einem Schritt (8) für die ausgewählte Eingangsgröße Operatoren, die die Eingangszugehörigkeitsfunktionen für Regelbereiche mit gleicher Ausgangszugehörigkeitsfunktion hinsichtlich der genannten Eingangsgröße verknüpfen, gesucht werden und nach einer Kompilierung (17) der übersetzte optimierter Regelbasistext in einen Wissensbasisspeicher des Fuzzy-Logik-Prozessors eingespeichert wird.

2. Verfahren nach Anspruch 1,
a) bei dem eine Mehrzahl von Eingangsgrößen bezüglich einer jeweiligen ausgewählten Eingangsgröße sortiert und auf mögliche Operatoren untersucht werden,
b) bei dem jeweils für jede ausgewählte Eingangsgröße der erforderliche Speicherplatz ermittelt wird (10),
c) bei dem die Eingangsgröße ermittelt wird, die einen minimalen Speicherbedarf für die Regelbasis ergibt (12), und
d) bei der der Regelbasistext bezüglich der Eingangsgröße (EG_{Min}) mit minimalem Speicherbedarf sortiert (13) und die entsprechenden Operatoren ermittelt (14) werden, bevor die Kompilierung (17) erfolgt.

3. Verfahren nach Anspruch 2,
a) bei dem eine globale Sortierung der Regelbasis nach steigenden Nummern der Eingangsgrößen erfolgt,
b) bei dem danach die Regelbasis bezüglich einer ersten Hälfte von Eingangsgrößen (EGₘₐₓ₋₁ .... EGₓ₊₁) auf einen möglichen Operatoreinsatz untersucht wird, wobei die entstandenen Bereiche gleicher Regelprämissen beibehalten werden und die Regelbasis nur noch nach den verbleibenden Eingangsgrößen sortiert werden,
c) bei dem danach die gesamte Regelbasis nach fallenden Nummern der Eingangsgrößen sortiert werden und
d) bei dem danach die Regelbasis bezüglich der zweiten Hälfte (EG₂ ... EGₓ) der Eingangsgrößen auf einen möglichen Operatoreinsatz untersucht werden, wobei die entstandenen Bereiche gleicher Regelprämissen beibehalten werden und nur noch die verbleibenden Eingangsgrößen sortiert werden.

4. Verfahren nach einem der Ansprüche 1 bis 3,
a) bei dem als erstes festgestellt wird, ob für die ausgewählte Eingangsgröße in der sortierten Regelbasis Regeln mit allen linguistischen Werten vorhanden sind (83),
b) bei dem festgestellt wird (84), ob nur ein einzelner linguistischer Wert in der jeweiligen Regelgruppe fehlt,
c) bei dem festgestellt wird (85), ob der maximal und minimal mögliche linguistische Wert für die ausgewählte Eingangsgröße in der Regelgruppe enthalten ist, und
d) bei dem aufeinanderfolgende linguistische Werte zu Operatoren zusammengefaßt werden, wobei die Regelbasis jeweils um diese durch Operatoren repräsentierten Regeln reduziert wird und solange Operatoren gebildet werden, bis nur noch operatorfreie Einzelprämissen verbleiben.

5. Verfahren nach einem der vorhergehenden Ansprüche,
bei dem nach der Operatorsuche (8, 14) eine Sortierung zur Optimierung zur Ausnutzung von Regelnwörtern erfolgt, um bei der Abspeicherung der Regelbasis keine Lücken in den Regelwörtern zuzulassen.

6. Verfahren nach einem der vorhergehenden Ansprüche,
bei dem nach der Sortierung (4) der Regelbasis hinsichtlich der Regelkonklusionen festgestellt wird, ob identische Regeln vorliegen (5) und gegebenenfalls diese identischen Regeln auf jeweils eine entsprechende Regel reduziert werden (6).

7. Verfahren nach einem der vorhergehenden Ansprüche,
bei dem festgestellt wird, ob bereits im Regelbasistext (RT) Operatoren vorhanden sind (2) und gegebenenfalls diese Operatoren zu Regeln mit operatorfreien Einzelprämissen dekomprimiert werden (3).

## Claims

1. Method for automatic production of a knowledge base for a fuzzy logic processor,
a) in which a rule base text (RT) is sorted (4) on the basis of its rule conclusions,
b) in which the rule base text which has been sorted on the basis of the rule conclusions is sorted with respect to at least one selected input variable (EG₃, EGₒₚₜ), in such a manner
- that groups with a constant linguistic value of an input variable (EG₁) which has not been selected are formed,
- that, within these groups and with respect to at least one next input variable (EG₂) which has not been selected, if such a variable is present, groups with the same linguistic value are formed, likewise on the basis of this at least one next input variable, and
- that the groups are sorted on the basis of the linguistic values of the selected input variable (EG₃), and
c) in which, in a step (8) for the selected input variable, operators are sought which link the input association functions for rule areas with the same output association function with regard to said input variable and, after compilation (17), the translated, optimized rule base text is stored in a knowledge base memory in the fuzzy logic processor.

2. Method according to Claim 1,
a) in which a number of input variables are sorted on the basis of a respective selected input variable and are investigated for possible operators,
b) in which the required memory space is in each case determined (10) for each selected input variable,
c) in which that input variable is determined which results (12) in the minimum memory requirement for the rule base, and
d) in which the rule base text is sorted (13) on the basis of that input variable (EG_{Min}) which has the minimum memory requirement, and the corresponding operators are determined (14) before the compilation (17) is carried out.

3. Method according to Claim 2,
a) in which global sorting of the rule base is carried out on the basis of rising numbers of the input variables,
b) in which, after this, the rule base is investigated for possible operator use on the basis of a first half of input variables (EGₘₐₓ₋₁ .... EG_{X+1}), with the resultant areas having the same rule premises being retained and the rule base being sorted only on the basis of the remaining input variables,
c) in which, after this, the entire rule base is sorted on the basis of falling numbers of the input variables, and
d) in which, after this, the rule base is investigated for possible operator use on the basis of the second half (EG₂ ... EGₓ) of the input variables, with the resultant areas having the same rule premises being retained and only the remaining input variables then being sorted.

4. Method according to one of Claims 1 to 3,
a) in which, first of all, the method establishes whether rules with all the linguistic values are present (83) for the selected input variable in the sorted rule base,
b) in which the method establishes (84) whether only one individual linguistic value is missing in the respective rule group,
c) in which the method establishes (85) whether the maximum and minimum possible linguistic values for the selected input variable are contained in the rule group, and
d) in which successive linguistic values are combined to form operators, with the rule base in each case being reduced by these rules which are represented by operators, and operators being formed until only individual premises which are still free of operators remain.

5. Method according to one of the preceding claims,
in which, after the operator search (8, 14), sorting is carried out for optimization relating to the use of rule words, in order not to allow any gaps in the rule words when storing the rule base.

6. Method according to one of the preceding claims,
in which, after sorting (4) the rule base on the basis of the rule conclusions, the method establishes whether any identical rules are present (5) and, if appropriate, these identical rules are reduced (6) to one appropriate rule in each case.

7. Method according to one of the preceding claims,
in which the method establishes whether there are already any operators (2) in the rule base text (RT) and, if appropriate, decompresses (3) these operators to form rules with operator-free individual premises.

## Revendications

1. Procédé de génération automatique d'une base de connaissances pour un processeur à logique floue,
a) dans lequel on trie (4) un texte de base de règles (RT) selon ses conclusions de règles,
b) dans lequel on trie le texte de base de règles, trié selon les conclusions de règles, par rapport à au moins une grandeur d'entrée sélectionnée (EG₃, EGₒₚₜ) de telle sorte que
- on forme des groupes avec valeur linguistique constante d'une grandeur d'entrée non sélectionnée (EG₁),
- à l'intérieur de ces groupes par rapport à au moins une prochaine grandeur d'entrée non sélectionnée (EG₂), si celle-ci existe, on effectue une formation de groupes avec même valeur linguistique également par rapport à cette ou ces prochaines grandeurs d'entrée, et
- on trie les groupes par rapport aux valeurs linguistiques de la grandeur d'entrée sélectionnée (EG₃), et
c) dans une étape (8), on cherche pour la grandeur d'entrée sélectionnée des opérateurs qui combinent les fonctions d'appartenance d'entrée pour des domaines de règles ayant la même fonction d'appartenance de sortie du point de vue de ladite grandeur d'entrée et on mémorise le texte de base de règles optimisé et traduit, après une compilation (17), dans une mémoire de base de connaissances du processeur à logique floue.

2. Procédé selon la revendication 1,
a) dans lequel on trie une multiplicité de grandeurs d'entrée par rapport à une grandeur d'entrée sélectionnée respective et on cherche des opérateurs possibles,
b) dans lequel on détermine (10) à chaque fois pour chaque grandeur d'entrée sélectionnée la place nécessaire en mémoire,
c) dans lequel on détermine la grandeur d'entrée qui donne (12) un encombrement minimal en mémoire pour la base de règles, et
d) dans lequel on trie (13) le texte de base de règles par rapport à la grandeur d'entrée (EG_{Min}) avec encombrement minimal en mémoire et on détermine (14) les opérateurs correspondants avant que la compilation (17) s'effectue.

3. Procédé selon la revendication 2,
a) dans lequel on effectue un tri global de la base de règles selon les numéros croissants des grandeurs d'entrée,
b) dans lequel on examine ensuite la base de règles par rapport à une première moitié de grandeurs d'entrée (EGₘₐₓ₋₁ à EGₓ₊₁) pour trouver une possible utilisation d'opérateur, les domaines créés qui ont les mêmes prémisses de règles étant conservés et la base de règles n'étant encore triée que selon les grandeurs d'entrée restantes,
c) dans lequel on trie ensuite toute la base de règles selon les numéros décroissants des grandeurs d'entrée, et
d) dans lequel on examine ensuite la base de règles par rapport à la deuxième moitié de grandeurs d'entrée (EG₂ à EGₓ) pour trouver une possible utilisation d'opérateur, les domaines créés qui ont les mêmes prémisses de règles étant conservés et seules les grandeurs d'entrée restantes étant encore triées.

4. Procédé selon l'une des revendications 1 à 3,
a) dans lequel on détermine en premier (83) s'il existe pour la grandeur d'entrée sélectionnée dans la base de règles triée des règles avec toutes les valeurs linguistiques,
b) dans lequel on détermine (84) s'il manque seulement une valeur linguistique individuelle dans le groupe de règles respectif,
c) dans lequel on détermine (85) si la valeur linguistique possible en maximum et en minimum pour la grandeur d'entrée sélectionnée est contenue dans le groupe de règles, et
d) dans lequel des valeurs linguistiques successives sont regroupées en opérateurs, la base de règles étant réduite à chaque fois de ces règles représentées par des opérateurs et des opérateurs étant formés jusqu'à ce qu'il ne reste plus que des prémisses individuelles sans opérateur.

5. Procédé selon l'une des revendications précédentes, dans lequel, après la recherche d'opérateur (8, 14), on effectue un tri pour l'optimisation en vue de l'exploitation de mots de règles afin de n'admettre aucun vide dans les mots de règles lors de la mémorisation de la base de règles.

6. Procédé selon l'une des revendications précédentes, dans lequel, après le tri (4) de la base de règles du point de vue des conclusions de règles, on détermine (5) s'il existe des règles identiques et, le cas échéant, on réduit (6) ces règles identiques à chaque fois à une règle correspondante.

7. Procédé selon l'une des revendications précédentes, dans lequel on détermine (2) s'il existe déià dans le texte de base de règles (RT) des opérateurs et, le cas échéant, on décomprime (3) ces opérateurs en règles avec des prémisses individuelles sans opérateur.
